# EUROPÄISCHE PATENTSCHRIFT

(11) **EP 1 747 118 B1**
(45) Veröffentlichungstag und Bekanntmachung des Hinweises auf die Patenterteilung: **15.10.2008**
(21) Anmeldenummer: 05741729.7
(22) Anmeldetag: 03.05.2005
(51) Int. Cl.: B60R 13/08

(54) **SCHALLABSORBIERENDES VERKLEIDUNGSELEMENT**
SOUND ABSORBING LINING ELEMENT
ELEMENT D'HABILLAGE A ABSORPTION ACOUSTIQUE

(30) Priorität: 10.05.2004 DE 102004022895
(43) Veröffentlichungstag der Anmeldung: 31.01.2007
(73) Patentinhaber: GM Global Technology Operations, Inc., Detroit, MI 48265-3000 (US)
(72) Erfinder: EIDT, Ralf, 55411 Bingen-Gaulsheim (DE); WARZELHAN, Ronald, 55262 Heidesheim (DE)
(74) Vertreter: Strauss, Peter
(86) Internationale Anmeldenummer: PCT/EP2005/004763
(87) Internationale Veröffentlichungsnummer: WO 2005/113295

(56) Entgegenhaltungen:
- EP-A- 1 393 982
- DE-A1- 3 242 604
- DE-A1- 4 442 767
- DE-U1- 29 521 960

## Beschreibung

Die Erfindung betrifft ein Verkleidungselement mit schallabsorbierenden Eigenschaften aus thermoplastischem Kunststoff, das wenigstens teilweise als Hohlkörper ausgebildet ist, zur Abschirmung des Motors und/oder der Abgasanlage eines Kraftfahrzeuges (KFZ).

Aus Lärmschutzgründen wird bei modernen KFZ angestrebt, den von Motoren und/oder Abgasanlagen emittierten Schall durch Verkleidung der entsprechenden Bauteile, insbesondere durch Motorraumauskleidung mit schallabsorbierenden Materialien zu verringern. Hierzu werden beispielsweise akustische Isolationselemente aus geschlossenzelligem Schaumstoff oder Vlies eingesetzt.

Ein derartiges Verkleidungselement ist aus den DE 4 442 767 A gemäß der Oberbegriff des Anspruchs 1 bekannt.

Aus der DE 198 48 679 A1 ist ein Isolationselement bekannt, welches sich durch einen Schichtaufbau aus Vlies und einer Umhüllung aus Folienlagen auszeichnet. Ein ähnliches Isolationselement ist aus der DE 198 48 677 A1 bekannt. Diese Vliese bestehen aus einem relativ komplizierten Verbund von dreidimensionalen und zweidimensionalen textilen Flächengebilden sowie Folien und/oder Schaumstoffen.

Ein weiterer Lösungsansatz besteht im Einsatz von schallabsorbierenden Platten mit sogenannten Hohlraum-Resonatoren. So ist in der DE 25 15 127 C2 eine schallabsorbierende Platte mit Gruppen benachbarter Hohlraum-Resonatoren mit konstantem Querschnitt und unterschiedlichen Längen beschrieben, deren nebeneinander liegende akustisch offene Enden Schalleintrittsöffnungen der Hohlraum-Resonatoren bilden. Solche Hohlraum-Resonatoren sind in der Regel als Elemente mit verhältnismäßig komplexem inneren Aufbau zur möglichst effektiven Schallabsorption ausgebildet. Die Herstellung solcher Schallabsorber aus röhrenartigen Elementen ist dementsprechend aufwendig.

Schallabsorbierende Verkleidungselemente, die zur Verringerung des vom Motor emittierten Schalls eingesetzt und auch als Motorkapsel bezeichnet werden, müssen bei Servicearbeiten an der Unterseite des KFZ (Ölwechsel usw.) entfernt werden, um den Zugang zum Motorraum auch von unten zu gewährleisten. Permanente Öffnungen in Motorkapseln konterkarieren die Schallisolation, temporär verschließbare Öffnungen besitzen den Nachteil, dass die verschließenden Teile bei höheren Geschwindigkeiten flattern oder klappern und damit unangenehme Geräusche verursachen. Bei noch höheren Geschwindigkeiten, beispielsweise > 160 km/h, > 180 km/h, > 200 km/h oder > 240 km/h, können sich die lösbaren Elemente sogar ganz aus ihren Befestigungspunkten lösen, wegfliegen und dabei den Straßenverkehr gefährden.

Der vorliegenden Erfindung lag die Aufgabe zugrunde, ein Verkleidungselement bereitzustellen, das zu Servicearbeiten nicht vollständig demontiert werden muss und insbesondere bei Hochgeschwindigkeitsfahrten dennoch frei von den geschilderten Nachteilen ist. Zusätzlich sollte das bereitzustellende Verkleidungselement leicht und kostengünstig herstellbar sowie einfach recyclingfähig sein.

Gegenstand der vorliegenden Erfindung ist in einer ersten Ausführungsform ein schallabsorbierendes Verkleidungselement aus thermoplastischem Kunststoff, das wenigstens teilweise als Hohlkörper ausgebildet ist, zur Abschirmung des Motors und/oder der Abgasanlage eines KFZ, das eine Serviceklappe aufweist, welche mit einem Filmscharnier mit dem Grundkörper verbunden ist.

Besonders bevorzugt ist ein erfindungsgemäßes Verkleidungselement aus thermoplastischem Kunststoff, nachstehend als Motorkapsel bezeichnet, wobei die Motorkapsel einstückig ausgebildet ist. Diese lassen sich insbesondere mittels Blasformverfahren einfach und kostengünstig herstellen.

Bei dem erfindungsgemäßen Verkleidungselement mit schallabsorbierenden Eigenschaften aus thermoplastischem Kunststoff kann man beispielsweise auf die Aufbringung zusätzlicher schallabsorbierender Materialien, wie Vliesmatten oder dergleichen verzichten, da die Motorkapsel einen bereits ausreichenden Schallschutz gewährleistet. Ein solcher Schallschutz kann bei einstückiger Ausbildung der Motorkapsel beispielsweise durch kassettenförmig ausgebildete Kästchen erreicht werden.

Die erfindungsgemäße Ausgestaltung des Verkleidungselements besitzt außerdem den Vorteil, dass nicht mehr die gesamte Motorkapsel demontiert werden muss, wenn an der Unterseite des Motorraumes Wartungsarbeiten vorzunehmen sind. Die Hochgeschwindigkeitsfestigkeit kann in einfacher Weise durch die geometrische Ausgestaltung der Randbereiche oder durch konstruktive Zusatzmaßnahmen (siehe hierzu weiter unten) erreicht werden.

Erfindungsgemäß weist das schallabsorbierende Verkleidungselement einen Flächen-Teilbereich auf, der geöffnet werden kann und an einer seiner Seiten mit dem Verkleidungselement unlösbar verbunden ist. Der Flächen-Teilbereich wird als "Serviceklappe" bezeichnet. Die unlösbare Verbindung zwischen Serviceklappe und Verkleidungselement ist filmgelenkartig ausgebildet und wird auch als "Filmscharnier" bezeichnet. Das Filmscharnier zeichnet sich vorzugsweise durch eine geringere Materialstärke als die Materialstärke der Serviceklappe und des restlichen Verkleidungselements aus. In bevorzugten Ausführungsformen der vorliegenden Erfindung beträgt die Materialstärke ("Dicke") des Filmscharniers 10 bis 90%, vorzugsweise 20 bis 80%, besonders bevorzugt 30 bis 75% und insbesondere 50 bis 70% der Materialstärke ("Dicke") der Serviceklappe.

In bevorzugten Ausführungsformen der vorliegenden Erfindung nimmt die Serviceklappe einen großen Teil der Fläche des Verkleidungselementes ein. Hier sind erfindungsgemäße Verkleidungselemente bevorzugt, bei denen die Fläche der Serviceklappe mindestens 50%, vorzugsweise mindestens 60%, besonders bevorzugt mindestens 70% und insbesondere mindestens 80% der Fläche des schallabsorbierenden Verkleidungselementes ausmacht.

Im Hinblick auf übliche Kraftfahrzeugdimensionen sind für den Personenkraftwagenbereich erfindungsgemäße Verkleidungselemente bevorzugt, die dadurch gekennzeichnet sind, dass die Breite der Serviceklappe (und vorzugsweise die Länge des Filmscharniers) mindestens 30 cm, vorzugsweise mindestens 40 cm, besonders bevorzugt mindestens 60 cm und insbesondere mindestens 80 cm beträgt.

Der Begriff "Breite" kennzeichnet dabei die Erstreckung der Serviceklappe in Richtung orthogonal zur Fahrzeuglängsachse, d.h. zur Fahrtrichtung. Vorzugsweise erstreckt sich das Filmscharnier an einer der Breiten der Serviceklappe über mindestens 70% der Breite der Serviceklappe, besonders bevorzugt über mindestens 85% und insbesondere über die gesamte Breite der Serviceklappe. Das Filmscharnier wird in bevorzugten Ausführungsformen der vorliegenden Erfindung so angeordnet, dass es in Fahrtrichtung des Kraftfahrzeuges vorne liegt, die Serviceklappe also gegen den Fahrtwind aufgeklappt werden müsste.

Die Serviceklappe weist mindestens eine gerade Kante auf, an der das Filmscharnier angeordnet ist. Im Übrigen sind der Gestaltungsvielfalt keine Grenzen gesetzt. So kann die Serviceklappe halbkreisförmig, halbellipsenförmig, trapezförmig, parallelogrammförmig, rechteckig oder quadratisch ausgebildet sein. Im Hinblick auf die Öffnungsfläche sind trapezförmige, rechteckige oder quadratische Grundformen der Serviceklappe bevorzugt.
Besonders bevorzugte erfindungsgemäße Verkleidungselemente sind dadurch gekennzeichnet, dass die Service klappe rechteckig ist.

Die Länge der Serviceklappe (die längste Ausdehnung orthogonal zum Filmscharnier) ist bei den zuletzt genannten Serviceklappen über die gesamte Breite gleich; bei halbkreisförmigen Ausgestaltungen naturgemäß nicht. Bei erfindungsgemäß bevorzugten Verkleidungselementen beträgt die Länge der Serviceklappe mindestens 30 cm, vorzugsweise mindestens 40 cm, besonders
bevorzugt mindestens 60 cm und insbesondere mindestens 80 cm beträgt.

Ein erfindungsgemäßes Verkleidungselement lässt sich verhältnismäßig einfach herstellen, beispielsweise aus Polypropylen.

Gegebenenfalls kann ein erfindungsgemäßes Verkleidungselement auch glasfaserverstärktes Polypropylen aufweisen.

Wegen der begrenzten Hitzebeständigkeit des Polypropylens, kann in bevorzugten Ausführungsformen zusätzlich ein Hitzeschild, beispielsweise aus Aluminium oder ähnlichem Material auf das Verkleidungselement aufgebracht werden. Dies ist notwendig um die Wärme der hitzentwickelnden Bauteilen, z.B. Auspuff, ableiten zu können.

Es ist daher bevorzugt, dass das Verkleidungselement wenigstens teilweise, insbesondere im Bereich des Auspuffs mit einem wärmeableitenden Hitzeschild beschichtet ist.

Die Herstellung des Verkleidungselements kann vorzugsweise im Extrusionsverfahren erfolgen. Besonders bevorzugt handelt es sich um ein Gesamt-Bauteil, das im Extrusions-Blasformverfahren hergestellt ist. Bei solchen Teilen liegt am meisten bevorzugt Einteiligkeit vor, auch wenn diese beim fertigen Produkt nicht immer ohne weiteres erkennbar ist.

Demnach ist ein besonders bevorzugtes erfindungsgemäßes Verkleidungselement dadurch gekennzeichnet, dass es als einteiliges Blasformteil ausgebildet ist.

Von besonderer Bedeutung ist auch noch, dass das Verkleidungselement bevorzugt vollständig ohne Faserverstärkung, nur aus üblichem Kunststoff- Werkstoff, hergestellt sein kann.

Die Serviceklappe ist mittels des Filmscharniers unlösbar mit dem Verkleidungselement verbunden, kann aber entlang des Filmscharniers für Servicearbeiten abgeknickt werden. Um die Serviceklappe im geschlossenen Zustand gegen unbeabsichtigtes Öffnen zu sichern, können Arretierungseinrichtungen am Verkleidungselement vorgesehen werden. Im einfachsten Fall sind dies Schnellverschlüsse, beispielsweise Knebelverschlüsse oder Drehverschlüsse, mit welchen die Serviceklappe an ihren Längsseiten und/oder der dem Filmscharnier gegenüberliegenden Breitseite befestigt wird.

In bevorzugten Ausführungsformen der vorliegenden Erfindung wird die Serviceklappe an ihren Seitenrändern mittels lösbarer Befestigungselemente am Verkleidungselement arretiert.

Besonders bevorzugt ist eine Befestigung der Serviceklappe an ihren beiden Längsseiten. Ein bevorzugtes lösbares Befestigungselement stellen schienenförmige Elemente dar, welche mindestens 50%, vorzugsweise mindestens 70%, besonders bevorzugt mindestens 80% und insbesondere die Gesamtheit der Länge der Längsseiten der Serviceklappe abdecken. Diese schienenförmigen Befestigungselemente können ihrerseits mittels Rast-, Schnapp- oder Klemmverbindung oder mittels anderer geeigneter Schnellverschlüsse an dem Verkleidungselement befestigt werden.

Durch die Abdeckung der Längsseiten mittels der schienenartig ausgebildeten lösbaren Befestigungselemente wird effektiv vermieden, dass die Serviceklappe bei höheren Geschwindigkeiten flattert oder klappert und damit unangenehme Geräusche verursacht. Auch bei noch höheren Geschwindigkeiten, beispielsweise > 160 km/h, > 180 km/h, > 200 km/h oder > 240 km/h, ist die Serviceklappe ruhig und sicher am Verkleidungselement befestigt, ohne dass die Gefahr bestünde, dass sich die Serviceklappe oder die lösbaren Befestigungselemente aus ihren Befestigungspunkten lösen oder wegfliegen und dabei den Straßenverkehr gefährden.

Bevorzugte erfindungsgemäße Verkleidungselemente sind daher dadurch gekennzeichnet, dass die lösbaren Befestigungselemente schienenförmig ausgebildet sind und mittels Schnellverschlüssen am Verkleidungselement befestigt sind.

Das Verkleidungselement, insbesondere als Motorkapsel ausgebildet, kann Verstärkungselemente aufweisen. Solche Verstärkungselemente können zur Erhöhung der Verwindungssteifheit und/oder zur Stabilisierung bzw. Verhinderung einer Wellung der Serviceklappe dienen. Beispielsweise können die Verstärkungselemente auf und/oder im Randbereich der Serviceklappe angeordnet sein.

Angesicht der Fläche der Serviceklappe besteht insbesondere bei hohen Geschwindigkeiten die Gefahr, dass es ohne zusätzliche Verstärkungselemente auf und/oder im Randbereich der Serviceklappe es zu einer ungewollten Öffnung der Serviceklappe führt.

In bevorzugten Ausführungsformen der vorliegenden Erfindung weist die Serviceklappe an ihren Rändern Verstärkungselemente auf. Diese können an allen, bei rechteckigen Serviceklappen beispielsweise an drei Rändern vorgesehen sein. Es ist jedoch bevorzugt, sie lediglich an zwei Rändern, bei rechteckigen Serviceklappen an den Seitenrändern der Serviceklappe, d.h. in Fahrtrichtung, anzuordnen.

Als Verstärkungselemente, die eine Wellung der Serviceklappe verhindern, haben sich Profile mit Verstärkungsrippen bewährt. Die Dicke der Verstärkungsrippen beträgt vorzugsweise 2 mm bis 5 mm, besonders bevorzugt 2, 5 mm bis 4 mm, beispielsweise 2,5 mm oder 3 mm.

Durch die Verstärkungselemente mit den vorgenannten Profilen, wie Verstärkungsrippen (Holm), wird die Serviceklappe besonders effektiv verwindungssteif gegen Wellung, Verformung und insbesondere gegen unbeabsichtigtes Öffnen geschützt.

Wie bereits erwähnt, sind bevorzugte erfindungsgemäße Verkleidungselemente als Unterbodenabdeckplatte für ein KFZ ausgebildet.

Eine solche Unterbodenabdeckplatte gewährleistet nicht nur ausgezeichneten Schallschutz, sondern auch der CW-Wert eines mit einer solchen Unterbodenabdeckplatte ausgestatteten KFZ wird deutlich verbessert, da Luftverwirbelungen in dem zur Straße offenen Motorraum oder an exponierten Bauteilen der Unterbodengruppe des Fahrzeugs vermieden werden. Solche Luftverwirbelungen sind ebenfalls Geräuschquellen, die einhergehend mit der CW-Wert-Verbesserung ausgeschaltet werden. Weiter kann die Unterbodenverkleidung auch zugleich integriert mit einer Motorraumkäpselung, zur Kapselung des Motors nach unten hin, ausgebildet sein. Insoweit würde dann die Unterbodenverkleidung das Kraftfahrzeug praktisch über die gesamte Länge unterseitig überdecken.

Ein solches Verkleidungselement besitzt wenigstens einseitig, nämlich an der dem Fahrzeug zuzukehrenden Seite, eine durch die Hohlraumaufteilung gegebene Topographie, die dem Unterbodenprofil des KFZ etwa entspricht.

Erfindungsgemäß bevorzugte Verkleidungselemente sind dadurch gekennzeichnet, dass die Unterbodenverkleidung Funktionsteile beinhaltet.

So kann in dem Verkleidungselement wenigstens ein dieses durchsetzender Luftkanal vorgesehen sein, beispielsweise zur Anströmung eines Ölkühlers oder dergleichen.

Im Weiteren kann bei der Unterbodenverkleidung, integriert zwischen Oberwand und Unterwand, auch ein Reservoir etwa im Sinne eines Flüssigkeitsreservoirs, ausgebildet sein. Hierzu können dann Durchbrüche oder Löcher für Zu- und Ableitung vorgesehen sein. Auch kann die Unterbodenverkleidung, insbesondere die Oberwand, Ausformungen zur Halterung von Kabeln oder Leitungen aufweisen.

Die Unterbodenverkleidung kann auch in Bezug auf die Belüftung des Fahrzeuginnenraumes und/oder eine Klimatisierung einbezogen werden. So können zur Kühlung Luftleitungen hindurchgeführt sein, die dann wiederum in das Fahrzeuginnere zurückführen. Wenn der Unterboden des Kraftfahrzeuges entsprechende Öffnungen aufweist, kann auch diese Unterbodenverkleidung insgesamt als "Klimaverkleidung" dienen, d. h. dass Luft, etwa gekühlte Luft, an einer Seite hineingeblasen wird und dann über ganzflächig verteilte Öffnungen von unten, den Unterboden des Kraftfahrzeuges durchsetzend, in den Innenraum des Kraftfahrzeuges abgegeben wird.

Solche Unterbodenverkleidungen können in verschiedenster Weise hergestellt sein. Beispielsweise in Form von Steg-Doppelplatten, also Platten, die jeweils einen Steg abragend von der Plattenfläche aufweisen und so gegeneinander gesetzt sind unter Bildung eines Hohlraums. Weiter kann sie im sogenannten "Twin-Sheed-Prozess" ausgebildet sein. Bevorzugt ist - wie bereits erwähnt -eine Ausbildung als Extrusions-Blasteil, entsprechend dem Extrusions-Blasformprozess, wobei einteilige Blasformkörper besonders bevorzugt sind.

Im Hinblick auf die vorstehend angesprochene Verbesserung des Luftwiderstandes sind erfindungsgemäße Verkleidungselemente bevorzugt, bei denen die Unterwand außenflächig glattflächig ausgebildet ist.

Zur Schallabsorption ist der Hohlraum vorzugsweise in mehrere kassettenförmige ausgebildete Teilvolumina unterteilt. Die Kästchen oder die Oberwand können Durchbrüche aufweisen im Sinne eines bzw. zur Bildung eines Helmholtzresonators.

Um die Herstellung durch Blasformen, beispielsweise Extrusions-Blasformen, zu erleichtern, auch um das Bauteil möglichst gleichmäßig aufblasen bzw. aufweiten zu können und möglichst wenige Aufblaslöcher vorsehen zu müssen, ist es bevorzugt, dass die Teilvolumina des Hohlraums über Kanäle miteinander kommunizieren.

Zweckmäßigerweise sind wenigstens einige der kassettenförmig ausgebildeten Hohlräume von kleinvolumig ausgebildeten Aussteifungshohlräumen gesäumt, deren Tiefe geringer ist, als diejenige der kassettenförmig ausgebildeten Hohlräume.

Vorzugsweise sind Versteifungsrippen vorgesehen, die durch Verschweißungen der Wandungen des Bauteils zwischen den Aussteifungshohlräumen gebildet wurden.

Weiterhin kann ein umlaufender Saumbereich vorgesehen sein, in welchem die Wandungen des Verkleidungselements flächig miteinander verschweißt sind. Hierdurch wird eine Schweißnahtbildung beim Blasverfahren im herkömmlichen Sinne entbehrlich. Für die beiden Formhälften des Werkzeugs müssen demzufolge bei einem Vergleich zu dem klassischen Extrusions-Blasformvertahren von Hohlkörpern geringere Schließkräfte aufgebracht werden, da lediglich die Ränder des Bauteils abgequetscht werden müssen.

Eine weitere bevorzugte Ausführungsform sieht vor, dass Befestigungsstellen, die an der Unterbodenverkleidung zum Befestigen am Unterboden des Kraftfahrzeuges vorgesehen sind, so angeordnet sind, dass sie an ein Schwingungsbild des Unterbodens des Kraftfahrzeuges angepasst angeordnet sind. Bevorzugt ist hierbei insbesondere, dass die Befestigungsstellen im Bereich einer größten Amplitude des Schwingungsbildes des Unterbodens des Kraftfahrzeuges bzw. des Gesamtfahrzeuges, abhängig von der tatsächlichen Befestigung, angeordnet sind.

Die Befestigungsstellen an der Unterbodenverkleidung sind vorzugsweise verstärkt ausgebildet. Dies kann beispielsweise durch eine vergrößerte Wandstärke jedenfalls im Bereich der Befestigungsstellen, erfolgen.

Vorteilhafte Ausführungsformen der Erfindung sind Gegenstand der abhängigen Patentansprüche und der folgenden Beschreibung anhand der Zeichnungen zu entnehmen.

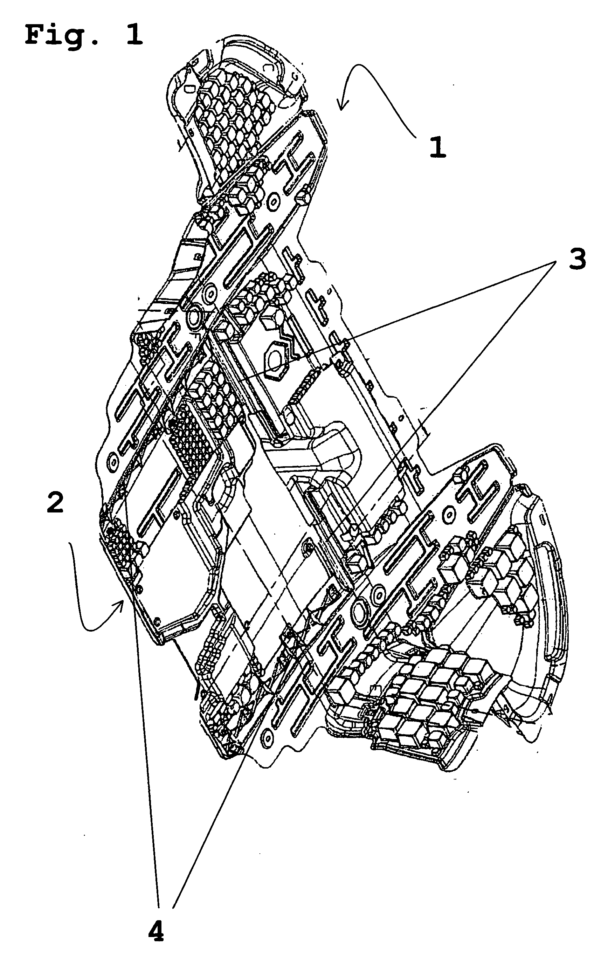

- Fig. 1: eine schematische Darstellung eines erfindungsgemäßen schallabsorbierenden Verkleidungselements.

Die Figur 1 zeigt eine schematische Darstellung eines erfindungsgemäßen schallabsorbierenden Verkleidungselements aus thermoplastischem Kunststoff, das wenigstens teilweise als Hohlkörper ausgebildet ist.

Dargestellt ist ein schallabsorbierendes Verkleidungselement 1 in Form einer Unterbodenverkleidung für Kraftfahrzeuge (Motorkapsel), welches eine Serviceklappe 2 aufweist, die über ein Filmscharnier 3 an der Motorkapsel befestigt ist. Die Serviceklappe 3 weist schienenförmige Verstärkungsprofile 4 auf, welche die Serviceklappe 2 stabilisieren.

Die Serviceklappe (2) kann bevorzugt an ihren Seitenrändern über wenigstens ein Verstärkungsprofil/e (4) des Grundelements, auch als Verkleidungselement bezeichnet, arretiert sein, wobei die Verstärkungsprofil/e (4) entlang wenigstens einer Seite der Serviceklappe, vorzugsweise entlang wenigstens zwei gegenüberliegenden Seiten der Serviceklappe und besonders bevorzugt über die Länge der Serviceöffnung angeordnet sein können.

### Bezugszeichenliste

- 1: Verkleidungselement (Motorkapsel)
- 2: Serviceklappe
- 3: Filmscharnier
- 4: Verstärkungsprofile

## Patentansprüche

1. Schallabsorbierendes Verkleidungselement (1), insbesondere Motorkapsel, aus thermoplastischem Kunststoff, das wenigstens teilweise als Hohlkörper ausgebildet ist, zur Abschirmung des Motors und/oder der Abgasanlage eines KFZ, **dadurch gekennzeichnet, dass** es eine Serviceklappe (2) aufweist, welche mit einem Filmscharnier (3) mit dem Grundkörper verbunden ist, wobei die Serviceklappe (2) an ihren Seitenrändern über wenigstens ein Verstärkungsprofil/e (4) des Verkleidungselements arretiert ist, wobei die Verstärkungsprofil/e (4) entlang wenigstens einer Seite der Serviceklappe angeordnet sind.

2. Verkleidungselement nach Anspruch 1, **dadurch gekennzeichnet, dass** die Fläche der Serviceklappe (2) mindestens 50 %, vorzugsweise mindestens 60 %, besonders bevorzugt mindestens 70 % und insbesondere mindestens 90 % der Fläche des schallabsorbierenden Verkleidungselementes (1) ausmacht.

3. Verkleidungselement nach einem der Ansprüche 1 oder 2, **dadurch gekennzeichnet, dass** die Breite der Serviceklappe (2) und/oder vorzugsweise die Länge des Filmscharniers (3) mindestens 30 cm, vorzugsweise mindestens 40 cm, besonders bevorzugt mindestens 60 cm und insbesondere mindestens 80 cm beträgt.

4. Verkleidungselement nach einem der Ansprüche 1 bis 3, **dadurch gekennzeichnet, dass** die Länge der Serviceklappe (2) mindestens 30 cm, vorzugsweise mindestens 40 cm, besonders bevorzugt mindestens 60 cm und insbesondere mindestens 80 cm beträgt.

5. Verkleidungselement nach einem der Ansprüche 1 bis 4, **dadurch gekennzeichnet, dass** die Serviceklappe (2) rechteckig ist.

6. Verkleidungselement nach einem der Ansprüche 1 bis 5, **dadurch gekennzeichnet, dass** es als einteiliges Blasformteil ausgebildet ist.

7. Verkleidungselement nach einem der Ansprüche 1 bis 6, **dadurch gekennzeichnet, dass** die Serviceklappe (2) an ihren Seitenrändern über die Verstärkungsprofile (4), mittels Befestigungselemente, vorzugsweise lösbarer Befestigungselemente, am Verkleidungselement arretiert ist.

8. Verkleidungselement nach einem der Ansprüche 1 bis 7, **dadurch gekennzeichnet, dass** die Verstärkungsprofil/e (4) entlang wenigstens zwei gegenüberliegenden Seiten der Serviceklappe und besonders bevorzugt über die Länge der Serviceöffnung angeordnet sind.

9. Verkleidungselement nach Anspruch 8, **dadurch gekennzeichnet, dass** die lösbaren Befestigungselemente schienen förmig ausgebildet sind und mittels Schnellverschlüssen am Verkleidungselement befestigt sind.

10. Verkleidungselement nach einem der Ansprüche 1 bis 9, **dadurch gekennzeichnet, dass** es als Unterbodenabdeckplatte für ein KFZ ausgebildet ist.

11. Verkleidungselement nach einem der Ansprüche 1 bis 10, **dadurch gekennzeichnet, dass** die Unterwand außenflächig glattflächig ausgebildet ist.

12. Verkleidungselement nach einem der Ansprüche 1 bis 11, **dadurch gekennzeichnet, dass** das Verkleidungselemente Verstärkungselemente aufweist, wobei die Verstärkungselemente vorzugsweise im Randbereich der Serviceklappe angeordnet sind.

13. Verkleidungselement nach einem der Ansprüche 1 bis 12, **dadurch gekennzeichnet, dass** die Unterbodenverkleidung Funktionsteile beinhaltet.

## Claims

1. Sound absorbing lining element (1), primarily engine saggar made of thermoplastic synthetic material, which is at least partially designed as hollow body to shield the engine and/or the flue gas system of a motor vehicle, **characterized in that** it is equipped with one service hatch (2) which is connected with the basic body by means of a film frame joint (3) wherein the service hatch (2) is blocked on its lateral borders through at least one enhancement profile or several enhancement profiles (4) wherein the enhancement profile or the enhancement profiles (4) are aligned at least along one side of the service hatch.

2. Sound absorbing lining element (1) according to claim 1, **characterized in that** the surface of the service hatch (2) constitutes at least 50%, preferably at least 60%, very preferably at least 70% and according to the best embodiment at least 80% of the surface of the sound absorbing lining element (1).

3. Lining element according to one of the claims 1 or 2, **characterized in that** the width of the service hatch (2) and/or preferably the length of the film frame joint (3) amounts at least to 30 cm, preferably to at least 40 cm, very preferably at least 60 cm and according to the best embodiment at least to 80 cm.

4. Lining element according to one of the claims 1 to 3, **characterized in that** the length of the service hatch (2) amounts at least to 30 cm, preferably to at least 40 cm, very preferably at least 60 cm and according to the best embodiment at least to 80 cm.

5. Lining element according to one of the claims 1 to 4, **characterized in that** the service hatch (2) is rectangular.

6. Lining element according to one of the claims 1 to 5, **characterized in that** it is designed as blow molding component made of one piece.

7. Lining element according to one of the claims 1 to 6, **characterized in that** the service hatch (2) is blocked on its lateral borders through the enhancement profiles (4) by means of fastening elements, preferably of detachable fastening elements, on the lining element.

8. Lining element according to one of the claims 1 to 7, **characterized in that** the enhancement profile(s) (4) are aligned at least along two opposite sides of the service hatch and according to the most preferable embodiment along the length of the service opening.

9. Lining element according to claim 8, **characterized in that** the detachable fastening elements are designed in the form of rails and are fastened on the lining element by means of quick opening devices.

10. Lining element according to one of the claims 1 to 9, **characterized in that** as underbody cover panel it is designed for a motor vehicle.

11. Lining element according to one of the claims 1 to 10, **characterized in that** the inferior wall is designed with a smooth external surface.

12. Lining element according to one of the claims 1 to 11, **characterized in that** the lining elements are equipped with enhancement elements wherein the enhancement elements are preferably aligned in the border area of the service hatch.

13. Lining element according to one of the claims 1 to 12, **characterized in that** the underbody cover panel comprises functional components.

## Revendications

1. L'élément de revêtement absorbant le son (1), en particulier la capsule du moteur, en plastique thermoplastique qui est tout au moins partiellement formée d'une pièce creuse, pour l'antiparasitage du moteur et / ou du système d'échappement des gaz d'un véhicule, est **caractérisé en ce qu'**il présente un clapet de service (2). Celui-ci est connecté à une charnière à film (3) au corps principal et où le clapet de service (2) sur ses bords de page est arrêté à au moins un profil de renforcement (4) de l'élément de revêtement et où les profils de renforcement (4) sont disposés à au moins une page du clapet de service.

2. L'élément de revêtement selon revendication 1, **caractérisé en ce que** la surface du clapet de service (2) fait au moins 50%, préférentiellement au moins 60%, particulièrement recherché au moins 70% et tout particulièrement au moins 80% de la surface de l'élément de revêtement absorbant le son.

3. L'élément de revêtement selon l'une des revendications 1 ou 2, **caractérisé en ce que** la largeur du clapet de service (2) et / ou de préférence la longueur de la charnière à film (3) fait au moins 30 cm, préférentiellement au moins 40 cm, particulièrement recherché au moins 60 cm et tout particulièrement au moins 80 cm.

4. L'élément de revêtement selon l'une des revendications 1 à 3, **caractérisé en ce** la longueur des clapets de service (2) fait au moins 30 cm, préférentiellement au moins 40 cm, particulièrement recherché au moins 60 cm et tout particulièrement au moins 80 cm.

5. L'élément de revêtement selon l'une des revendications 1 à 4, **caractérisé en ce que** le clapet de service (2) est rectangulaire.

6. L'élément de revêtement selon l'une des revendications 1 à 5, **caractérisé en ce qu'**il est constitué d'un seul moule souffle.

7. L'élément de revêtement selon l'une des revendications 1 à 6, **caractérisé en ce que** le clapet de service (2) est arrêté à l'élément de revêtement à ses bords de page sur les profils de renforcement (4), au moyen des éléments de fixation, de préférence des éléments de fixation amovibles.

8. L'élément de revêtement selon l'une des revendications 1 à 7, **caractérisé en ce que** le(s) profils de renforcement (4) sont disposés le long d'au moins deux pages opposées au clapet de service et de préférence en particulier sur la longueur de l'ouverture de service.

9. L'élément de revêtement selon revendication 8, **caractérisé en ce que** les éléments de fixation amovibles sont disposés en forme de rails et fixés au moyen de fermetures rapides à l'élément de revêtement.

10. L'élément de revêtement selon l'une des revendications 1 à 9, **caractérisé en ce qu'**il est disposé comme plaque de recouvrement sous-sol pour un véhicule.

11. L'élément de revêtement selon l'une des revendications 1 à 10, **caractérisé en ce que** le sous-mur est disposé sur la surface extérieure et lisse.

12. L'élément de revêtement selon l'une des revendications 1 à 11, **caractérisé en ce que** l'élément de revêtement présente des éléments de renforcement où ceux-ci sont disposés de préférence dans la zone du clapet de service.

13. L'élément de revêtement selon l'une des revendications 1 à 12, **caractérisé en ce que** le revêtement sous-terrain contient des parties fonctionnelles.
